# EUROPEAN PATENT APPLICATION

(11) **EP 2 942 659 A1**
(43) Date of publication of application: **11.11.2015**
(21) Application number: 14460027.7
(22) Date of filing: 05.05.2014
(51) Int. Cl.: G02F 1/09, G11B 5/127, G09F 3/00

(54) **Device to repeatedly create and delete images on a microcapsule magnetic basis**

(71) Applicant: Syriusz Ltd., 35-111 Rzeszow (PL)
(72) Inventor: Dziedzic, Thomasz, 37-100 Lancut (PL)
(74) Representative: Wlazlo, Andrzej

(57) **Abstract**

A device to repeatedly make and delete pictures, recorded in local memory, on a micro-capsule magnetic base by using motion of the lines of force of a magnetic field, a detector of position, and its own power supply, has a slidable head (1) equipped with a unit (3) for generating the magnetic stream, the unit being seated within the housing (2) on the base (6) of the head and being composed of coils (4) whose each has a ferromagnetic core (5) positioned in such a way that the magnetic stream generated is directed onto the area under the base (6) of the head.

Each of the coils (4) is individually impulse-powered, the length of the impulse and the moment of its delivery being calculated and determined by a program, depending on the position, given by the motion detector, of the slidable head (1) in relation to the basic position of the picture being made. The core ((5)of each coil (4) is situated vertically in relation to the base (6) of the slidable head (1), and just under the plate of the base (6) there is seated a ferromagnetic element (7) in the housing (2), the housing (2) having guides (9) of the slidable head in the border plane, under the ferromagnetic element (7).

## Description

The invention subject-matter is a device to repeatedly make and delete pictures on a micro-capsule magnetic base, designed for use in multi-format department stores, ware houses, etc.

Known are solutions to both the construction and the technology of the displays that do not need a permanent energy supply. They need energy only at a moment where the content being displayed is being changed. The biggest progress in this domain has been obtained through the e-paper technology, which is now widely used in electronic devices of common use f.i. in e-book readers. Not in all domains can they be used, especially where big dimensions of a presented picture are needed, due to big manufacturing costs and their vulnerability almost equal to that of the LED or LCD -type displays.

One of the alternative directions of development in this domain are capsule magnetic materials. Their working principle is the displacing of ferromagnetic particles locked up in a capsule, on which particles an external magnetic field acts. The capsules in which the particles have arranged themselves closer to an observer are perceived as black, the remaining - as white. The basic limit to further developing such displays is their not too big picture definition.

Also known is a new solution, so called micro-capsule magnetic paper, which makes it possible to put together a picture using pixels of dimensions under 1mm. A material with such parameters is good for use where displays of bigger dimensions and lower manufacturing costs are needed. A method of making a picture, used now on a microcapsule magnetic paper, is to slide a suitably shaped permanent magnet on the surface of this paper - the most frequent writing tool is the neodymium scriber. As a result of the material stimulation done by a magnetic field there appears blackening where the magnet has been imposed. This method of making a picture is a troublesome, little precise and time-consuming one, and therefor e the application field of the microcapsule magnetic displays is essentially limited nowadays to toys and gadgets. Use of the direct current to generate a magnetic field means trouble if we want to obtain a magnetic field of a current strength sufficient to stimulate the magnetic material. A considerable number of windings in the coil and a considerable strength of a current flow through it are needed. Both the first as well the second factor (the bigger current the thicker winding wire) result in an increase of overall dimensions, and in turn a thin winding wire risks being burnt during the flow of high voltage current.

The aim of the invention is to avoid these inconveniences. This aim has been obtained by having developed such a solution, in which a device to repeatedly make and delete pictures, recorded in local memory, on a micro-capsule magnetic base by using motion of the lines of force of a magnetic field, a detector of position, and its own power supply, has a slidable head equipped with a unit for generating magnetic stream, the unit being seated within the housing on the base of the head and being composed of coils whose each has a ferromagnetic core positioned in such a way that the magnetic stream generated is directed onto the area under the base of the head.

Each of the coils is individually impulse-powered, the length of the impulse and the moment of its delivery being calculated and determined by a program, depending on the position, given by the motion detector, of the slidable head (1) in relation to the basic position of the picture being made. The core of each coil is situated vertically in relation to the base of the slidable head, and closely under the plate of the base which plate has the shape of a flat plate, there is seated a ferromagnetic element in the housing , the housing having guides (9) of the slidable head in the border plane, under the ferromagnetic element. The ferromagnetic element is a magnetic lens and has the shape of a plate adjusted to the plate of the head base, whereas both the magnetic lens and the plate of the head base have a concentric hole made in the axis of each core, and the diameter of this hole is bigger than that of the core, and the base has around the concentric hole a mounting seat for the lens.

The use of a slidable head as per the invention makes it possible to quickly exchange a picture on a micro-capsule magnetic base and, in addition, to repeatedly make and delete pictures of high definition which is to say on big surfaces. Use of the controlled programmable energy supply to the head coils makes it possible to avoid the risk of damaging the winding of a coil due to a high intensity current which has to be used if we want to obtain an appropriate contrast of a picture being made. This invention as presented is easy to use , safe, and the costs involved in making a picture are not big ones. An essential feature to the invention is also its ecological value, because the micro-capsule magnetic paper is cheap and can be repeatedly used, so the consumption of the paper goes down.

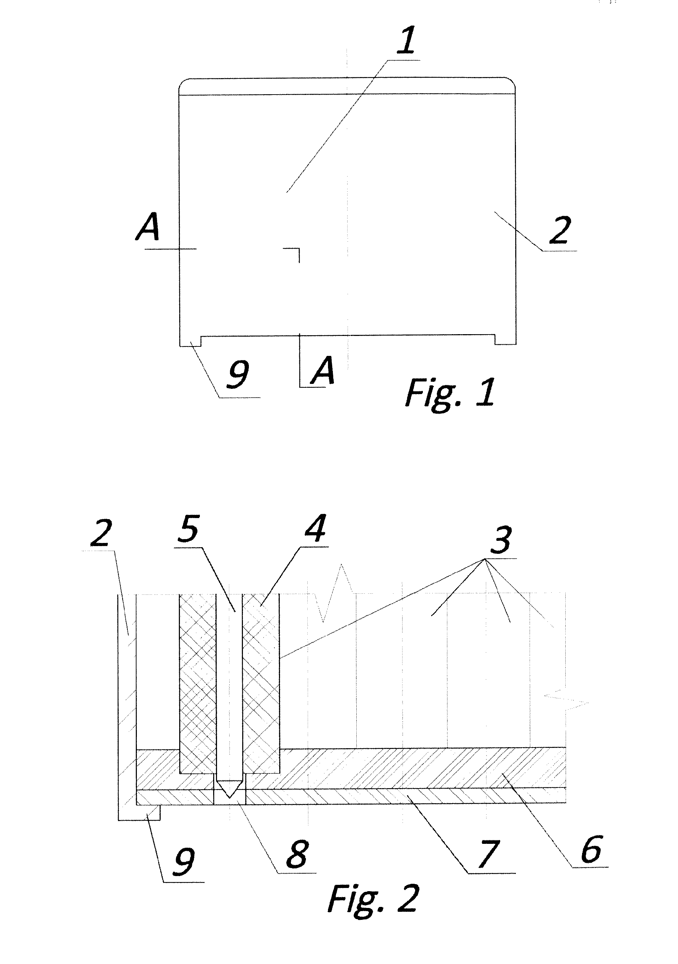

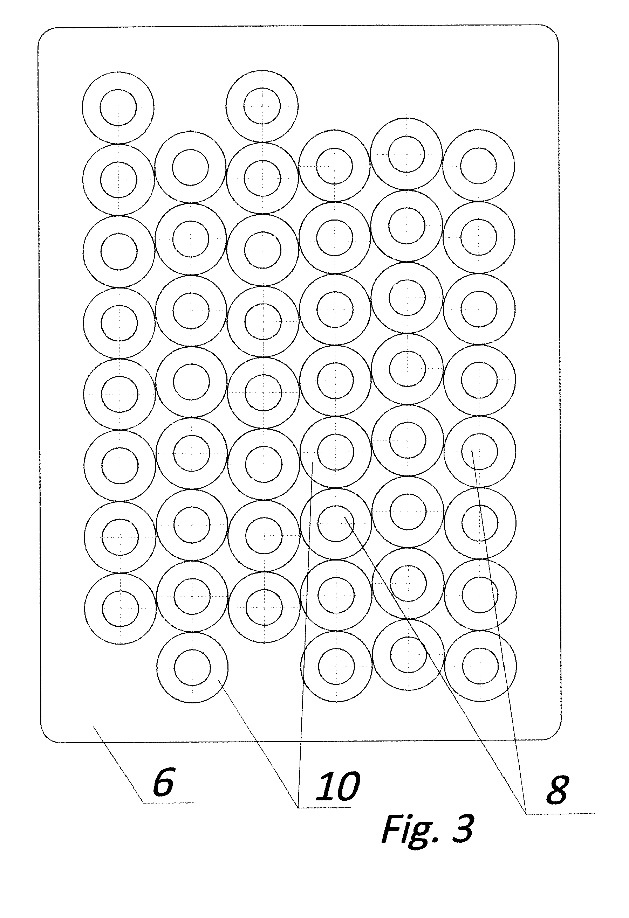

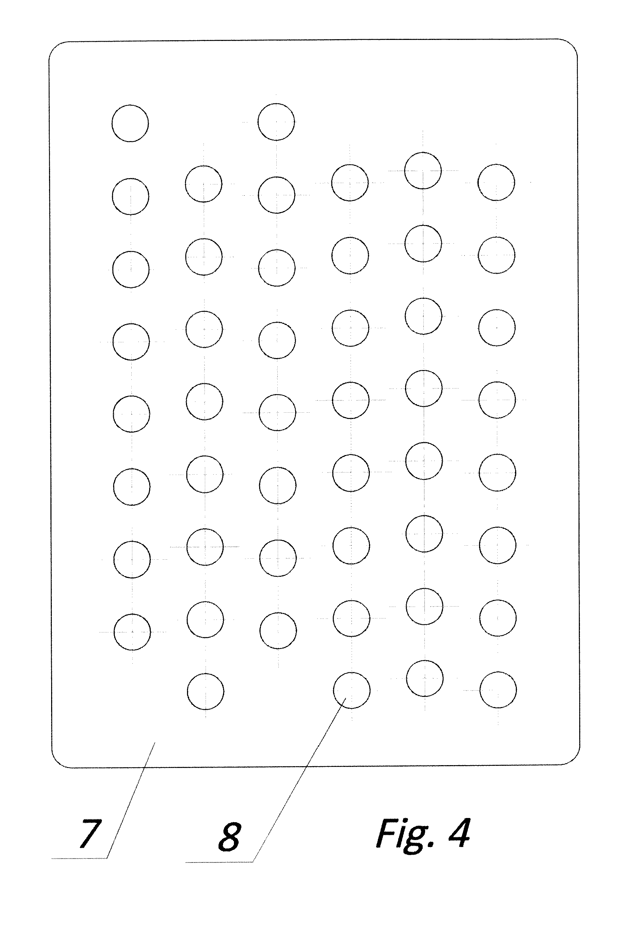

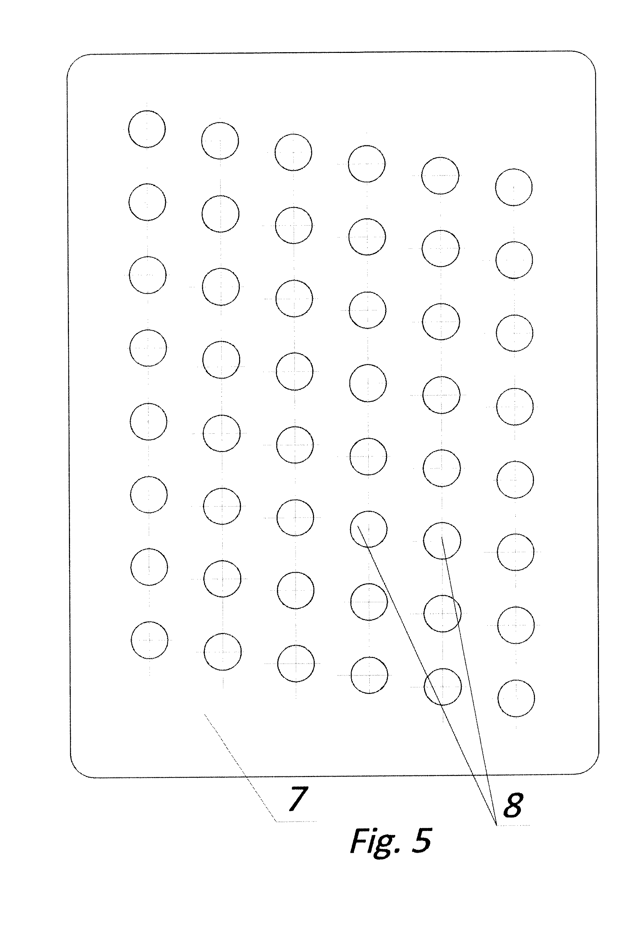

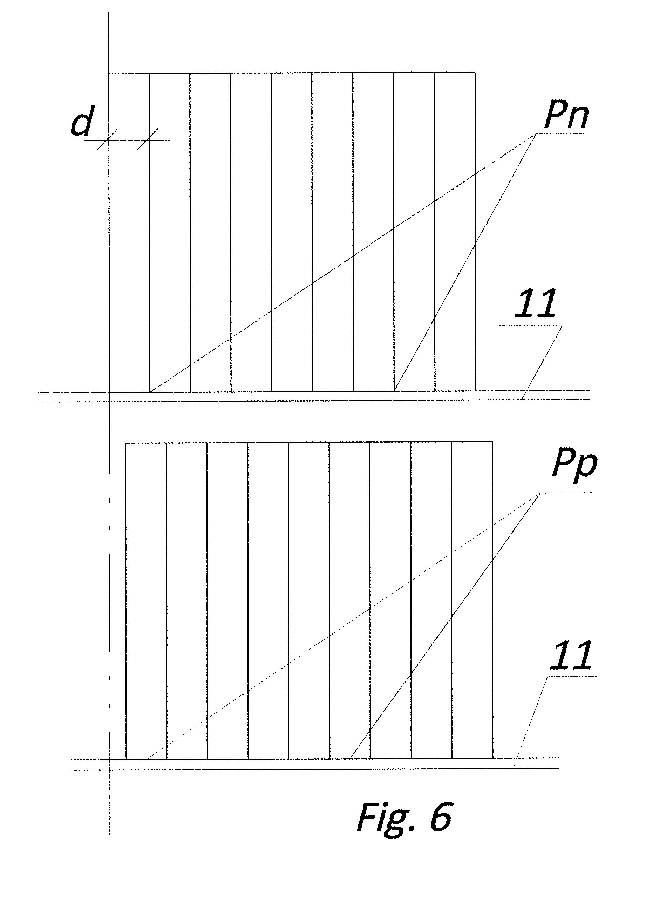

The invention executed in the embodiment example is shown in a drawing where Fig. 1 shows the slidable head, in top view, Fig. 2 - the slidable head as shown in part section along the line A-A from Fig. 1, Fig. 3 - the base of the head with mounting seats and holes laid out , in top view, Fig. 4 - ferromagnetic plate with concentric holes laid out as shown on Fig. 3, in top view, Fig. 5 - ferromagnetic plate with concentric holes laid out as shown in a change, in top view, Fig. 6 - a diagram showing the next full position P_{P} of the coil core in a time corresponding to the displacement by a "d"-length of the core diameter, and subsequent intermediate positions Pₚ corresponding to the core displacement smaller than the "d"-length of the core diameter.

A device to repeatedly make and delete pictures on micro-capsule magnetic base has the form of a slidable head 1 equipped with controlling elements, its own memory and a direct- current energy supply. The slidable head 1 has a base 6 seated in a housing 2 on which base there is mounted a magnetic stream generating unit 3 composed of coils 4 whose each has a ferromagnetic core 5 situated in such a way that the magnetic stream generated should be directed on the area under the base 6 of the head. Each coil 4 of the unit 3 is individually impulse-powered, the length of the impulse and the moment of its delivery being calculated and determined by a program, depending on the position, given by the motion detector, of the slidable head 1 in relation to the basic position of the picture being made.

The core 5 of each coil 4 is situated vertically in relation to the base **6** of the slidable head 1, and just under the plate of the base 6, the plate having the form of a flat plate, there is seated in the housing 2 a magnetic lens having the shape of a plate adjusted to the plate of the head base 6, whereas the housing 2 has guides 9 of the slidable head 1 in the plane of the lens border. Both the magnetic lens 7 and the plate of the head base 6 have a concentric hole 8 made in the axis of each core 5, and the diameter of this hole is bigger than that of the core 5, and what is more the base 6 has around the hole 8 a mounting seat 10 for the lens 4.

The recording of the picture on the micro-capsule magnetic paper 11 by using this slidable head 1 is executed as follows.

During the movement of the head 1 there takes place the reading, done by the motion detector, of its position in relation to its initial position. The data from the detector are being put into the processor of the head 1 which determines, on the basis of those data, which fragment of the picture taken from the data-base in the memory of the head 1 should be, at a given moment , placed on the micro-capsule magnetic paper 11. Then an analysis of the individual points of the chosen fragment of the picture takes place. Based on this analysis, a sequence of the control impulses to be directed to the coil set 3 of the head 1 is being worked out. The control impulses put in motion the active elements of the head 1 which active elements act on the micro-capsule magnetic paper 11 being written on. The coil 4 is supplied with the high strength current, so the power-supply to the coils 4 has to be delivered in short impulses whose length and occurrence moment are calculated, as they arise, by the processor. Power-supply failures do not influence the quality of the picture because they take place as the core 5 is in the position which has been earlier already subjected to the exposure by means of the magnetic field. This situation is shown in the top chart where subsequent positions Pₚ of the core 5 during the change of the position by the "d"-value, which equals the diameter of the core 5, are shown. On the bottom chart there are shown intermediate positions Pₚ of the core 5, which are smaller than the "d"-value , in relation to the initial point. In this situation there is no need for the coil 4 to be powered. Any change of the position of the head 1 in relation to its initial position causes the above cycle to be resumed.

The slidable head 1 is composed of many coils 4 each of which is equipped with a core 5 made of ferromagnetic material. The duty of the core 5 is to transport the magnetic stream outside the coil 4 in an area possibly nearest to the surface being written on. So each of the coils 4, thanks to an electric impulse given by means of the core 5 which is being led out of the coil, is able to blacken the micro-capsule magnetic paper 11 in the area of its near contact with the core 5. Because each of the coils 4 is being displaced together with the head 1 therefore the points generated by it will form a line of a changeable intensity - depending on whether the coil 4, in a given position, was being power-supplied or not. If the coils 4 have been positioned to each other in such a way that the lines drawn by them adjoin each other, then the whole area under the slidable head 1 will be covered with points the intensity of which results from delivery or not delivery of the voltage to a given coil in its given position.

An essential element of the invention device is a magnetic lens 7 placed under the base 6 of the head to thicken the distribution of the lines of the magnetic field around the concentric holes 8, and therefore a considerably bigger part of the magnetic stream is being directed into the target area.

Deleting of a picture recorded in such a way is done by actuating the magnetic stream on the opposite side of the micro-capsule magnetic paper 11 where the picture has been recorded, so it is enough to slide the head 1 along the surface of this side.

## Claims

1. A device to repeatedly make and delete pictures, recorded in local memory, on a micro-capsule magnetic base by using motion of the lines of force of a magnetic field, a detector of position, and its own power supply, has a slidable head (1) equipped with a unit (3) for generating a magnetic stream, the unit being seated within the housing (2) on the base (6) of the head and being composed of coils (4) whose each has a ferromagnetic core (5) positioned in such a way that the magnetic stream generated is directed onto the area under the base (6) of the head.

2. The device according to the claim 1 **characterized in that** each coil (4) of the unit (3) is individually impulse-powered , whereas the length of the impulse and the instant of its delivery are calculated and determined by a program, based on the position, given by the motion detector, of the slidable head (1) in relation to the basic position of the picture being generated.

3. The device according to the claim 1 or 2 **characterized in that** the core (5)of each coil (4) is situated vertically in relation to the base (6) of the slidable head (1,) and just under the plate of the base (6)there is situated in a housing (2) a ferromagnetic element (7), and the housing (2) has guides (9) for the slidable head (1) in the plane of the border under the ferromagnetic element (7).

4. The device according to the claim 1 or 2 or 3 **characterized in that** the ferromagnetic element (7) is a magnetic lens and has the shape of a plate adjusted to the plate of the base (6), whereas both the magnetic lens and the plate of the base (6) of the head have a concentric hole (8) made in the axis of each core (5), and the diameter of this hole is bigger than that of the core (5).

5. The device according to the claim 4 **characterized in that** the base (6) has around the hole(8) a mounting seat (10) of the coil (4).

## Amended claims

### Amended claims in accordance with Rule 137(2) EPC.

1. A device to repeatedly make and delete pictures, recorded in local memory, on a micro-capsule magnetic base by using motion of the lines of the magnetic field's force, a detector of position, and its own power supply, has a slidable head equipped with a unit for generating a magnetic stream, the unit being seated within the housing on the base and being composed of coils, each coil having a ferromagnetic core positioned in such a way that the generated magnetic stream is directed onto the area under the base of the head, and each coil of the unit individually impulse-powered whereas the length of the impulse and the instant of its delivery are calculated and determined by a program, based on the position, given by the motion detector, of the slidable head in relation to the basic position of the picture being generated and the diameter of the coil's core, and the core of each coil is situated vertically in relation to the base of the slidable head, **characterized in that** the coils are placed in relation to each other in such a way, that the traces of the picture, which is drawn by the neighboring coil cores while the head is moving, cling to each other, and just under the plate of the base there is a ferromagnetic element (7), situated in a housing (2), whereas the housing (2) has guides (9) for the slidable head (1) in the plane of the border under the ferromagnetic element (7).

2. The device according to the claim 1 or 2 or 3 **characterized in that** the ferromagnetic element (7) is a magnetic lens and has the shape of a plate adjusted to the plate of the base (6), whereas both the magnetic lens and the plate of the base (6) of the head have a concentric hole (8) made in the axis of each core (5), and the diameter of this hole is bigger than that of the core (5).

3. The device according to the claim 4 **characterized in that** the base (6) has around the hole(8) a mounting seat (10) of the coil (4).
